# EUROPÄISCHE PATENTSCHRIFT

(11) **EP 0 386 299 B1**
(45) Veröffentlichungstag und Bekanntmachung des Hinweises auf die Patenterteilung: **03.08.1994**
(21) Anmeldenummer: 89104239.2
(22) Anmeldetag: 10.03.1989
(51) Int. Cl.: F16L 55/12, H02G 9/06

(54) **Vorrichtung zum Abdichten von Enden von Kabelleerrohren**
Apparatus for sealing the ends of ducts without cables
Dispositif pour étancher les extrémités de conduits pour câbles vides

(43) Veröffentlichungstag der Anmeldung: 12.09.1990
(73) Patentinhaber: Walter Rose GmbH & Co. KG, D-58099 Hagen (DE)
(72) Erfinder: Papenheim, Friedbert, D-5860 Iserlohn 7 (DE); Penz, Heinz, D-5800 Hagen 1 (DE)
(74) Vertreter: Patentanwälte Meinke, Dabringhaus und Partner

(56) Entgegenhaltungen:
- CH-A- 300 124
- DE-A- 3 638 732
- DE-C- 830 273
- GB-A- 571 261
- GB-A- 1 593 379

## Beschreibung

Die Erfindung richtet sich auf eine Vorrichtung zum Abdichten der Enden von Kabelleerrohren mit einem im wesentlichen zylindrischen, wenigstens zum Rohrinneren hin mit einem Boden verschlossenen Kunststoffkörper, der an seinem Außenumfang mit einer Dichtung und mit in Auszugsrichtung gerichteten Klemmkrallen an wenigstens einem im wesentlichen O-förmigen Federblech zur Aufbringung einer Klemmkraft im Inneren des abzudichtenden Kabelleerrohres versehen ist, wobei die Klemmkrallen über ein Verriegelungselement zwischen einer Verriegelungsstellung und einer Entriegelungsstellung bewegbar sind.

Das gattungsbildende Patent DE-C-36 38 732 geht aus von der DE-OS 16 65 122. Dort ist eine manschettenförmige Gummidichtung zwischen zwei Spannscheiben vorgesehen, die über einen Gewindestift gegeneinander gezogen werden können und so die Gummimanschette zwingen, sich an der Innenseite eines Leerrohres dichtend anzulegen. Es hat sich nun gezeigt, daß bei der Aufbringung der Anpreßkraft an derartigen Dichtungen über längere Zeit diese ermüden und altern, so daß die Preßscheiben evtl. nachgespannt werden müssen oder aber es geht die Dichtwirkung ganz verloren.

Aufgabe der vorliegenden Erfindung ist es, eine Lösung zu schaffen, mit der unter Vermeidung solcher Nachteile nach einer Montage eine gattungsgemäße Dichtvorrichtung auch längere Zeit in dem Leerrohr dichtend verbleibt, ohne daß es eines Nachspannens od. dgl. bedarf, wobei auch die Aufbringung der Klemmkraft mit besonders einfachen Mitteln und in baulich einfacher Art und Weise erreicht werden soll.

Bei einer Vorrichtung der eingangs bezeichneten Art wird diese Aufgabe gemäß der Erfindung durch die kennzeichnenden Merkmale des Anspruches 1 gelöst.

Es hat sich gezeigt, daß mit dieser Art der Klemmkrallenbildung eine konstruktiv einfache Lösung möglich wird, die bei der Bildung der Dichtvorrichtung mit wenigen Einzelteilen auskommt, da die im wesentlichen U-förmigen, die Klemmkrallen bildenden Federbleche darüber hinaus einige andere Funktionen übernehmen können. Aus der CH-A-300 124 ist eine Rohrabschlußdichtung bekannt, bei der eine blattförmige Sperrfeder zwischen zwei Auflagerplatten durch ein Gewindeelement in Sperrstellung verpreßbar ist. Eine Klemmwirkung, erzielt durch verformbare Tellerscheiben, zeigt auch die GB-A-571 261 bzw. die DE-C-830 273. Aktive Elemente, die die Klemmelemente gezielt in die Entriegelungsstellung bewegen, sind diesen Literaturstellen nicht zu entnehmen.

Zweckmäßig ist es, wenn je zwei U-förmige Federbleche zur Bildung von vier Klemmkrallen vorgesehen sind, um eine gleichmäßige Klemmwirkung am Umfang der Vorrichtung zu erreichen.

Vorteilhaft ist es, wenn die U-Schenkel gegenüber dem U-Steg nach innen weisend in einem Winkel kleiner 90° und die äußeren Bereiche der freien Enden der U-Schenkel geringfügig nach außen weisend angestellt sind. Diese Gestaltung hat den Vorteil, daß die Federbleche bei der Beaufschlagung durch die Kulissenflächen von sich eine Rückstellkraft gegen die Verpreßrichtung der Kulissenflächen ausüben können, dadurch, daß sie nach innen weisend geneigt sind und damit beim Verpressen von der Kulissenfläche aufgebogen werden. Diesem Aufbiegen wirken die Federbleche von sich aus durch die Innenneigung ihrer U-Schenkel entgegen und üben damit automatisch eine Rückstellkraft in Öffnungsrichtung aus, so daß sich beim Lösen der Vorrichtung die Federbleche von sich aus in eine entspannte Stellung und damit in die die Vorrichtung freigebende Stellung zurückbewegen.

Nach der Erfindung sind in Ausgestaltung die freien Enden der Federbleche bogenförmig gestaltet, was den besonderen Vorteil hat, daß diese sich linienförmig an die Innenseite des zu verschließenden Rohres anlegen und damit eine viel höhere Haltekraft aufbringen können.

Um die Federbleche zu führen und/oder um die Absenkbewegung der Scheibe mit den Führungsflächen zu beschränken, kann vorgesehen sein, daß die den Federblechen zugewandte Außenseite des Topfbodens mit Führungsstegen für die U-Stege der Federbleche ausgerüstet ist. Diese Führungsstege sind besonders zweckmäßig, wenn die U-Stege so frei geführt sind, daß sie bei Nachaußenpressen ihrer U-Schenkel sich gegen diese Richtung aufwölben können, womit zusätzlich die weiter oben beschriebene Rückstellkraft verstärkt wird.

Durch unterschiedliche Rohrmaterialien und Rohrgestaltungen bedingt, kommt es in der Praxis vor, daß die Innendurchmesser der Kabelführungsrohre in einem gewissen Bereich schwanken. Um dem Benutzer der erfindungsgemäßen Vorrichtung zu ermöglichen, für jeden Fall gerüstet zu sein, sieht die Erfindung auch vor, daß im Inneren des topfförmigen Dichtbereiches Klemmelemente zur Transportsicherung von Dichtringen vorgesehen sind, wobei diese Dichtringe vorzugsweise unterschiedliche Durchmesser aufweisen, um die Innendurchmesserschwankungen bei den Kabelführungsrohren ausgleichen zu können.

Exzenterbetätigte Stopfen sind bekannt, beispielsweise aus dem DE-GM 87 07 904, wo ein Exzenternocken mit drei Auflageflächen beschrieben ist, die jeweils einen unterschiedlichen Abstand zum Exzenterzapfen derart aufweisen, daß drei verschiedene Spreizpositionen für die Dichtmembran eingenommen werden können. Demgegenüber schafft die Erfindung durch axiales Verdrehen dieses Exzenternockens auf unterschiedlich hoher Unterlage zusätzliche Verstellmöglichkeiten.

Nach der Erfindung ist auch vorgesehen, daß zwischen dem Topfboden und der Scheibe eine Gummiringmembran mit nach außen weisenden umlaufenden Kerbringnuten vorgesehen ist. Durch die außenliegenden Dichtrippen wird erreicht, daß auch im stark ausgewölbten Zustand der Dichtung noch Dichtrippen gegen die Ausschub- oder Auszugsrichtung des Stopfens an der Rohrinnenwand ausgebildet sind, um so zusätzlichen Halt zu schaffen.

Um einen Wasser- oder Luftanschluß zu schaffen oder etwa eine Inspektionsöffnung, sieht die Erfindung auch vor, daß wenigstens der Exzenterspannzapfen als verschließbarer Hohlzylinder zum Anschluß für Wasser, Druck, Luft od. dgl. ausgebildet ist. Es hat sich gezeigt, daß es nützlich sein kann, den Stopfen mit solchen Anschlüssen zu versehen, etwa um Waschwasser einpressen zu können od. dgl., wie dies für sich gesehen aus der DE-A-16 65 122 bekannt ist.

Die Erfindung ist nachstehend anhand der Zeichnung beispielsweise näher erläutert. Diese zeigt in
- Fig. 1: einen Längsschnitt der erfindungsgemäßen Abdichtvorrichtung,
- Fig. 2: eine Aufsicht gemäß Linie V-V in Fig. 1,
- Fig. 3 und 4: Längsschnitte gemäß Fig. 1 mit unterschiedlicher Position des Exzenterhebels.

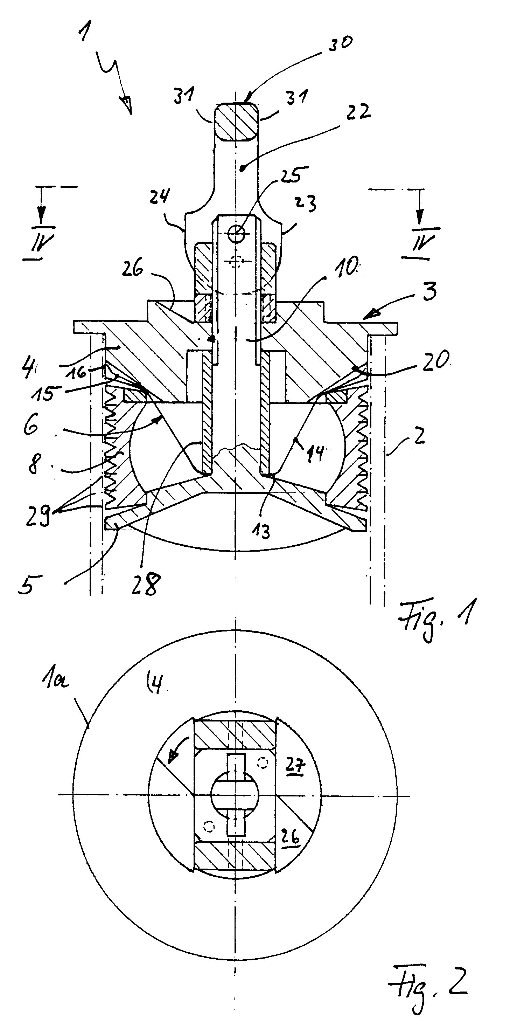

Die allgemein mit 1 bezeichnete Vorrichtung zum Abdichten z.B. der in Fig. 1 strichpunktiert angedeuteten Kabelführungsrohre 2 besteht aus einem topfförmigen Kunststoffhohlkörper 3 mit einem geschlossenen Topfboden 4, aus einem axial verschiebbaren Verpreßkörper 5 und zwei querschnittlich im wesentlichen U-förmig gestalteten Federblechen 6, wobei die äußere Zylinderfläche des topfförmigen Kunststoffkörpers 3 bereichsweise von einer Dichtmembran 8 gebildet wird.

Die Federbleche 6 sind, wie bereits erwähnt, im wesentlichen U-förmig gestaltet mit einem U-Steg 13 und U-Schenkel 14, die in ihren äußeren Randbereichen 15 wiederum nach außen weisend zurückgebogen gestaltet sind, wie sich dies insbesondere aus Fig. 1 ergibt. Die oberen Randbereiche 16 der zurückgestellten Bereiche 15 der U-Stege sind gewölbt gestaltet.

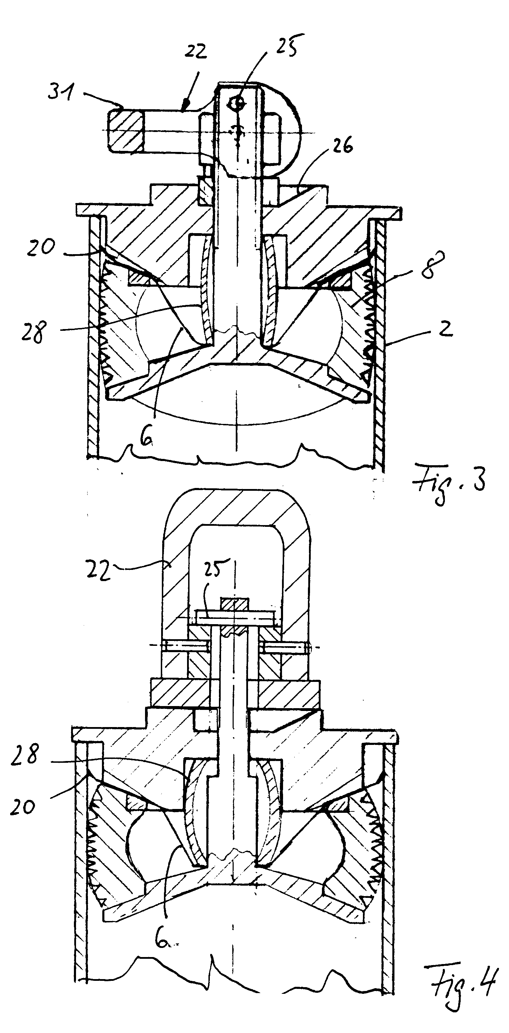

Die Vorrichtung 1 weist eine Scheibe 5 mit einem daran einstückig angeformten inneren Exzenterschaft 10 auf. Im Übergangsbereich zwischen Scheibe 5 und Exzenterschaft 10 ist das Federblech 6 befestigt. Der Exzenterschaft 10 wirkt mit einem Exzenterhebel 22 zusammen, der zwei Auflageflächen 23 und 24 aufweist, die einen unterschiedlichen Abstand zur mit 25 bezeichneten Drehachse haben. Der Exzenterhebel 22 kann durch axiales Verdrehen über Rampenflächen 26 auf ein höheres Niveau, nämlich auf Wirkflächen 27 verschwenkt werden, derart, daß im dargestellten Beispiel vier unterschiedliche Spreizpositionen eingenommen werden, nämlich die niedrigste durch Auflegen der Fläche 23 auf unterem Niveau, der Fläche 24 auf unterem Niveau nach Drehen um 90°, durch Auflegen der Fläche 23 auf höherem Niveau und schließlich durch Auflegen der Fläche 24 auf diesem höheren Niveau. Diese zwei unterschiedlichen Spreizstellungen sind in Fig. 3 und 4 wiedergegeben. Die Rückstellkraft wird durch eine innere Feder 28 aufgebracht.

Um eine größere Dichtwirkung zu erzielen, ist die Gummimembran 8 auf ihrer Außenfläche mit einer Vielzahl von Kerbringen bzw. Kerbringnuten 29 ausgerüstet, die sich in den aus den Fig. 3 und 4 ergebenden Positionen an die Innenseite der Rohre 2 anlegen können, derart, daß wenigstens ein Teil der Kerbringe gegen die Auszugsrichtung gerichtet ist.

Zusätzlich können optische Anzeigeeinheiten oder optische Kennzeichen vorgesehen sein, etwa kann die Stirnfläche 30 des Exzenterhebels rot gekennzeichnet sein, während die oberen Seitenflächen 31 eine andere Farbe aufweisen, um in der in Fig. 1 dargestellten Position für den Benutzer von außen sichtbar die unfixierte Stellung zu kennzeichnen durch die rote Farbe und etwa in der in den Fig. 3 und 4 wiedergegebenen Stellung durch Aufsicht auf die Seitenfläche etwa in grün, um ein Verspannen zu signalisieren.

Es sei noch darauf hingewiesen, daß es nicht näher dargestellt ist, daß der Schaft 10 in Fig. 1 als Hohlkörper ausgebildet sein kann, um Wasser- oder Druckluftanschlüsse dort vorsehen zu können.

Neben den hier dargestellten zwei Federblechen mit insgesamt vier Klemmkrallen 15 kann auch noch eine größere Anzahl an Federblechen vorgesehen sein, um eine Mehrzahl von Klemmkrallen möglich zu machen u. dgl. mehr.

## Patentansprüche

1. Vorrichtung (1) zum Abdichten der Enden von Kabelleerrohren (2) mit einem im wesentlichen zylindrischen, wenigstens zum Rohrinneren hin mit einem Boden (4) verschlossenen Kunststoffkörper (3), der an seinem Außenumfang mit einer Dichtung (8) und mit in Auszugsrichtung gerichteten Klemmkrallen (15) an wenigstens einem im wesentlichen U-förmigen Federblech (6) zur Aufbringung einer Klemmkraft im Inneren des abzudichtenden Kabelleerrohres (2) versehen ist, wobei die Klemmkrallen (15) über ein Verriegelungselement zwischen einer Verriegelungsstellung und einer Entriegelungsstellung bewegbar sind,
dadurch gekennzeichnet,
daß die Klemmkrallen (15) an Federblechen (6) gebildet sind, die eine Rückstellkraft gegen die Verriegelungsstellung aufweisen, daß die freien Enden der U-Schenkel (14), die die Klemmkrallen (15) bilden, von einem axial bewegbaren Verpreßkörper (5) über Kulissenflächen (20) aus der Entriegelungsstellung in die Verriegelungsstellung bewegbar sind, daß das Verriegelungselement als Exzenterhebel (22) auf die axial verschiebbaren Verpreßkörper wirkend ausgebildet ist und daß der Exzenterhebel (22) durch axiale Verdrehung auf unterschiedlich hohe Auflageflächen (27) bewegbar ist.

2. Vorrichtung nach Anspruch 1,
dadurch gekennzeichnet,
daß je zwei U-förmige Federbleche (6) zur Bildung von vier Klemmkrallen (15) vorgesehen sind.

3. Vorrichtung nach Anspruch 1 oder 2,
dadurch gekennzeichnet,
daß die U-Schenkel (14) gegenüber dem U-Steg (13) nach innen weisend in einem Winkel kleiner 90° und die äußeren Bereiche (15) der freien Enden der U-Schenkel (14) geringfügig nach außen weisend angestellt sind.

4. Vorrichtung nach einem der vorangehenden Ansprüche,
dadurch gekennzeichnet,
daß die freien Enden (16) der Federbleche bogenförmig gestaltet sind.

5. Vorrichtung nach einem der vorangehenden Ansprüche,
dadurch gekennzeichnet,
daß die den Federblechen (6) zugewandte Außenseite des Topfbodens (4) mit Führungsstegen (21) für die U-Stege (13) der Federbleche ausgerüstet ist.

6. Vorrichtung nach einem der vorangehenden Ansprüche,
dadurch gekennzeichnet,
daß zwischen dem Topfboden (4) und dem Verpreßkörper (5) eine Gummiringmembran (8) mit nach außen weisenden umlaufenden Kerbringnuten (29) vorgesehen ist.

7. Vorrichtung nach einem der vorangehenden Ansprüche,
dadurch gekennzeichnet,
daß wenigstens der Exzenterspannzapfen (10) als verschließbarer Hohlzylinder zum Anschluß für Wasser, Druck, Luft od. dgl. ausgebildet ist.

## Claims

1. A device (1) for sealing off the ends of empty cable conduits (2) comprising a substantially cylindrical plastics body (3) which is closed with an end portion (4) at least towards the conduit interior and which is provided at its outer periphery with a seal (8) and with cling claws (15) directed in the withdrawal direction, on at least one substantially U-shaped spring plate (6) for applying a clamping force in the interior of the empty cable conduit (2) to be sealed off, wherein the clamping claws (15) are movable by way of a locking element between a locking position and an unlocking position, characterised in that the clamping claws (15) are formed on spring plates (6) which have a return force in opposition to the locking position, that the free ends of the U-shape labs (14) which form the clamping claws (15) are movable by an axially movable pressing body (5) from the unlocking position into the locking position by way of guide surfaces (20), that the locking element is in the form of an eccentric lever (22) acting on the axially displaceable pressing body, and that the eccentric lever (22) is movable by axial rotation on to contact surfaces (27) at different heights.

2. A device according to claim 1 characterised in that there are respectively provided two U-shaped spring plates (6) for forming four clamping claws (15).

3. A device according to claim 1 or claim 2 characterised in that the U-shape limbs (14) are disposed relative to the web portion (13) of the U-shape facing inwardly at an angle of less than 90° and the outer regions (15) of the free ends of the U-shape limbs (14) are disposed facing slightly outwardly.

4. A device according to one of the preceding claims characterised in that the free ends (16) of the spring plates are of an arcuate configuration.

5. A device according to one of the preceding claims characterised in that the outside of the cup end portion (4), which outside faces towards the spring plates (6), is provided with guide limb portions (21) for the web portions (13) of the U-shape of the spring plates.

6. A device according to one of the preceding claims characterised in that disposed between the cup end portion (4) and the pressing body (5) is an annular rubber diaphragm (8) with outwardly facing, peripherally extending annular notch grooves (29).

7. A device according to one of the preceding claims characterised in that at least the eccentric clamping pin member (10) is in the form of a closable hollow cylinder to provide a connection for water, pressure, air or the like.

## Revendications

1. Dispositif (1) pour fermer de façon étanche les extrémités de tubes à câbles vides (2), avec un corps en matière synthétique (3) de forme sensiblement cylindrique et fermé au moins en direction de l'intérieur du tube par un fond (4), qui est muni sur sa périphérie externe d'une garniture (8) et de griffes de serrage (15) orientées en direction de l'extraction sur au moins une tôle élastique sensiblement en forme de U (6) pour appliquer une force de serrage à l'intérieur du tube à câbles vide (2) à fermer de façon étanche, les griffes de serrage (15) pouvant être déplacée par un élément de verrouillage entre une position de verrouillage et une position de déverrouillage, caractérisé en ce que les griffes de serrage (15) sont formées sur des tôles élastiques (6), qui appliquent une force de rappel dans la position de verrouillage, en ce que les extrémités libres des branches du U (14) formant les griffes de serrage (15) peuvent être déplacées par un corps de pression (5) mobile en direction axiale sur des surfaces de glissement (20) entre la position de déverrouillage et la position de verrouillage, en ce que l'élément de verrouillage est constitué sous forme d'un levier excentrique (22) agissant sur le corps de pression mobile en direction axiale, et en ce que le levier excentrique (22) peut être déplacé après une rotation axiale sur des surfaces d'appui (27) de hauteur différente.

2. Dispositif selon la revendication 1, caractérisé en ce que chacune des deux tôles élastiques en forme de U (6) sont prévues pour la formation de quatre griffes de serrage (15).

3. Dispositif selon la revendication 1 ou 2, caractérisé en ce que les branches du U (14) sont orientées vers l'intérieur par rapport à la partie de dos du U (13) en formant un angle inférieur à 90° et les parties externes (15) des extrémités libres des branches du U (14) sont légèrement tournées vers l'extérieur.

4. Dispositif selon l'une quelconque des revendications précédentes, caractérisé en ce que les extrémités libres (16) des tôles élastiques sont de forme courbe.

5. Dispositif selon l'une quelconque des revendications précédentes, caractérisé en ce que le côté externe du fond en forme de cuvette (4) qui est tourné vers les tôles élastiques (6) est équipé de nervures de guidage (21) pour les parties de dos (13) des tôles élastiques en forme de U.

6. Dispositif selon l'une quelconque des revendications précédentes, caractérisé en ce qu'il est prévu entre le fond en forme de cuvette (4) et le corps de pression (5) une membrane annulaire en caoutchouc (8) comportant des rainures annulaires périphériques en forme d'encoches (29) tournées vers l'extérieur.

7. Dispositif selon l'une quelconque des revendications précédentes, caractérisé en ce qu'au moins le tourillon de serrage à excentrique (10) est constitué sous forme d'un cylindre creux pouvant être fermé pour constituer un raccord pour de l'eau, de la pression, l'air ou analogues.
